# EUROPÄISCHE PATENTSCHRIFT

(11) **EP 2 424 712 B1**
(45) Veröffentlichungstag und Bekanntmachung des Hinweises auf die Patenterteilung: **03.04.2013**
(21) Anmeldenummer: 10720553.6
(22) Anmeldetag: 19.05.2010
(51) Int. Cl.: B25J 15/02, B65G 47/90

(54) **PRODUKTGREIFER**
PRODUCT GRIPPER
ÉLÉMENT DE SAISIE DE PRODUIT

(30) Priorität: 23.06.2009 DE 102009030012
(43) Veröffentlichungstag der Anmeldung: 07.03.2012
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2010/003077
(87) Internationale Veröffentlichungsnummer: WO 2010/149255

(56) Entgegenhaltungen:
- EP-A1- 2 039 632
- WO-A2-99/00306
- JP-A- 9 267 284
- US-A1- 2006 182 603

## Beschreibung

Die Erfindung betrifft einen Produktgreifer zum Aufnehmen eines Produkts, umfassend zwei Schaufelblätter, ein Antriebsmittel, um die Schaufelblätter zwischen einer ersten Position, in welcher die Schaufelblätter auf gegenüberliegenden Seiten des aufzunehmenden Produkts auf einer Auflage für das aufzunehmende Produkt aufsetzbar sind, und einer zweiten Position zu bewegen, in welcher sich die Schaufelblätter zumindest teilweise unter dem aufzunehmenden Produkt befinden, und einen Niederhalter zum Fixieren des aufzunehmenden Produkts, während die Schaufelblätter darunter bewegt werden, wobei der Niederhalter oberhalb einer durch die Schaufelblätter definierten Schaufelblattebene angeordnet ist.

Derartige Produktgreifer kommen beispielsweise in der Lebensmittelindustrie zum Einsatz, um Lebensmittelprodukte von einem ersten Fördermittel auf ein zweites Fördermittel umzusetzen, zu sortieren oder in eine Verpackung einzubringen. Typischerweise sind die Produktgreifer an dem beweglichen Teil eines Roboters montiert.

Bei einem bekannten Produktgreifer der eingangs genannten Art ist der Niederhalter durch eine federbelastete Platte gebildet, die beim Absenken des Produktgreifers auf ein aufzunehmendes Produkt mit der Produktoberseite in Eingriff gerät, einfedert und durch die Rückstellkraft der komprimierten Feder das Produkt fixiert.

Die EP 2 039 632 A1 offenbar einen Produktgreifer mit zwei zum Aufnehmen eines Produkts aufeinander zu bewegbaren Schaufelblättern und einem Niederhalter zur Fixierung des aufzunehmenden Produkts, wobei der Niederhalter durch ein elastisches Band gebildet ist, welches an seinen Enden an sich mit den Schaufelblättern mitbewegenden Bügeln angebracht ist.

Der Erfindung liegt die Aufgabe zugrunde, einen Produktgreifer zu schaffen, welcher eine zuverlässigere und schonendere Fixierung eines aufzunehmenden Produkts ermöglicht.

Die Aufgabe wird durch einen Produktgreifer mit den Merkmalen des Anspruchs 1 gelöst.

Erfindungsgemäß umfasst der Mechanismus zwei Schiebeleisten des Niederhalters, an denen der Bandgurt befestigt ist. Vorteilhafterweise ist der Bandgurt im Bereich seiner Enden an voneinander abgewandten Stirnseiten der Schiebeleisten befestigt. Hierdurch weist der Bandgurt aufgrund seiner Steifigkeit selbst im flachgezogenen Zustand noch eine gewisse Wölbung in Richtung des aufzunehmenden Produkts auf, welche die Auswölbung des Bandgurts zur Fixierung des Produkts erleichtert.

Erfindungsgemäß sind die Schiebeleisten quer zur Bewegungsrichtung der Schaufelblätter bewegbar.

Der Erfindung liegt der allgemeine Gedanke zugrunde, die Fixierung eines aufzunehmenden Produkts ausschließlich durch einen Bandgurt zu realisieren, dessen Wölbung durch einen entsprechend vorgesehenen Mechanismus gesteuert wird. Durch den Mechanismus lässt sich der Wölbungsradius des Bandgurts erhöhen, um diesen in Richtung des aufzunehmenden Produkts auszudehnen bzw. auszuwölben und mit diesem in Eingriff zu bringen. Umgekehrt kann der Mechanismus den Wölbungsradius verringern, den Bandgurt gewissermaßen also flachziehen, um den Bandgurt und das Produkt außer Eingriff zu bringen.

Es versteht sich von selbst, dass der Bandgurt eine gewisse Steifigkeit aufweisen muss, damit er im ausgewölbten Zustand eine ausreichende Klemmkraft auf das zu fixierende Produkt ausüben kann. Gleichzeitig erweist sich der Bandgurt aufgrund seiner Flexibilität insofern als vorteilhaft, als er sich an die Oberflächenkontur des zu fixierenden Produkts anpassen kann, wodurch der Bandgurt über eine größere Fläche mit dem Produkt in Kontakt steht und dieses schonender und zuverlässiger fixiert.

Ein geeigneter Bandgurt umfasst beispielsweise einen eine Gewebestruktur aufweisenden Kern, welcher zumindest bereichsweise von einem Kunststoffmantel umgeben ist, der auf seiner zum fixierenden Produkt weisenden Oberfläche gegebenenfalls mit einer die Reibung erhöhenden Struktur, z.B. Noppenstruktur oder dergleichen, versehen ist. Die Stärke eines geeigneten Bandgurtes kann im Bereich von 1 mm bis 3 mm liegen.

Vorteilhafte Ausbildungen der Erfindung sind den Unteransprüchen, der Beschreibung und der Zeichnung zu entnehmen.

Gemäß einer bevorzugten Ausführungsform ist der Mechanismus ausgebildet, um die Bewegung der Schaufelblätter aus ihrer ersten Position in ihre zweite Position in eine Auswölbung des Bandgurts in Richtung des aufzunehmenden Produkts umzusetzen. Das Auswölben des Bandgurts, d.h. also das Herunterfahren des Niederhalters, ist folglich mit der Bewegung der Schaufelblätter gekoppelt, genauer gesagt wird der Niederhalter mit dem zu fixierenden Produkt automatisch in Eingriff gebracht, wenn sich der Produktgreifer schließt und sich die Schaufelblätter unter das Produkt bewegen.

Vorzugsweise ist der Mechanismus außerdem so ausgebildet, dass er den Wölbungsradius des Bandgurts vergrößert, den Bandgurt also flachzieht, um Bandgurt und Produkt außer Eingriff zu bringen, wenn sich die Schaufelblätter aus ihrer zweiten Position zurück in ihre erste Position bewegen, d.h. der Produktgreifer sich öffnet. Die Kopplung der Betätigung des Niederhalters mit der Bewegung der Schaufelblätter hat den Vorteil, dass für die Betätigung des Niederhalters kein eigener Antrieb vorgesehen zu werden braucht.

Grundsätzlich ist aber auch eine Ausführungsform denkbar, bei welcher ein separater Antrieb für den Niederhalter vorgesehen ist, so dass sich der Bandgurt unabhängig von der Bewegung der Schaufelblätter mit dem zu fixierenden Produkt in Eingriff bringen oder von diesem lösen lässt.

Die Schiebeleisten können aufeinander zu bewegbar sein, um den Bandgurt in Richtung des aufzunehmenden Produkts auszuwölben. Durch die Bewegung der Schiebeleisten aufeinander zu verringert sich der Abstand zwischen den Enden des Bandgurts, wodurch sich der Radius der Wölbung des Bandgurts erhöht.

Eine besonders einfache bauliche Ausführungsform lässt sich realisieren, wenn die Schiebeleisten rechtwinklig zur Bewegungsrichtung der Schaufelblätter bewegbar sind.

Vorteilhafterweise sind die Schiebeleisten über eine Kulissenführung mit dem Antriebsmittel gekoppelt.

Beispielsweise können die Schiebeleisten jeweils eine gekrümmte Nut oder ein gekrümmtes Langloch aufweisen, in der bzw. dem jeweils ein Bolzenelement geführt ist. Die Bolzenelemente können dabei an einem zur Bewegung der Schaufelblätter vorgesehenen Hebelarm angebracht sein.

Vorteilhafterweise ist der Hebelarm um eine im Wesentlichen mittig angeordnete und zu der Schaufelblattebene senkrecht orientierte Schwenkachse verschwenkbar. Um einen ausreichenden Abstand der Schiebeleisten zueinander und eine synchrone Verschiebung der Schiebeleisten zu erreichen, sind die Bolzenelemente bevorzugt auf gegenüberliegenden Seiten der Schwenkachse an dem Hebelarm angebracht.

Der Hebelarm kann mittels wenigstens eines pneumatisch oder hydraulisch betätigbaren Zylinders verschwenkbar sein. Alternativ ist aber auch ein anderer Antrieb zur Verschwenkung des Hebelarms vorstellbar, beispielsweise ein elektrischer Antrieb.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine perspektivische Ansicht eines erfindungsgemäßen Produktgreifers mit geöffneten Schaufeln;
- Fig. 2: eine Draufsicht auf den Produktgreifer von Fig. 1 mit geöffneten Schaufeln;
- Fig. 3: eine Draufsicht auf den Produktgreifer von Fig. 1 mit geschlossenen Schaufeln;
- Fig. 4: eine Seitenansicht des Produktgreifers von Fig. 1 mit offenen Schaufeln; und
- Fig. 5: eine Seitenansicht des Produktgreifers von Fig. 1 mit geschlossenen Schaufeln.

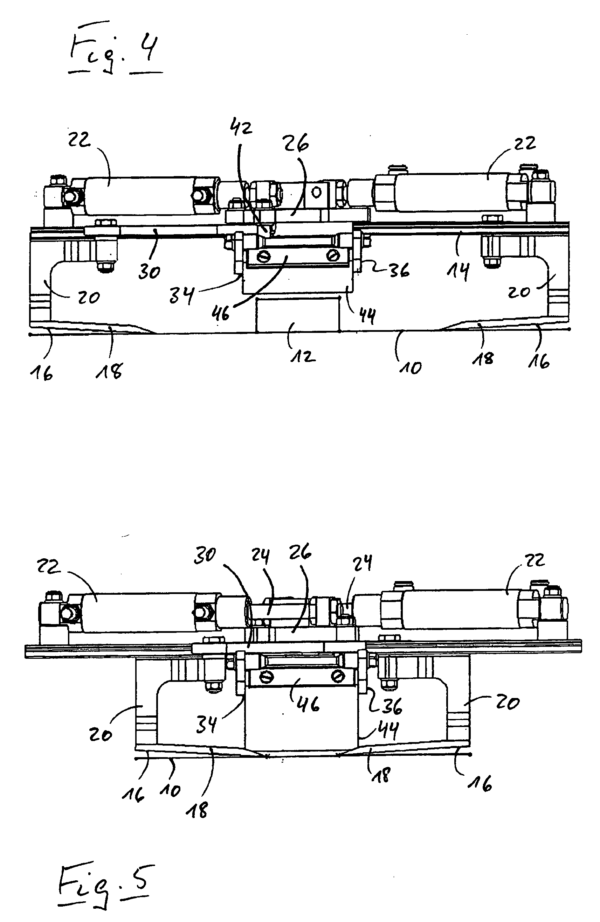

In den Figuren ist ein erfindungsgemäßer Produktgreifer dargestellt, welcher, beispielsweise als Teil eines nicht gezeigten Roboters, dazu vorgesehen ist, ein auf einer Produktauflage 10 (Fig. 4 und 5), z.B. auf einem Eintrageband, liegendes Produkt 12, z.B. ein Lebensmittelprodukt, aufzunehmen und an einem anderen Ort abzulegen.

Der Produktgreifer umfasst einen Träger 14, an dessen Unterseite zwei Schaufeln 16 angebracht sind, welche aus einer ersten Position, in der die Schaufeln 16 einen so großen Abstand zueinander aufweisen, dass sie seitlich neben dem Produkt 12 auf die Produktauflage 10 aufgesetzt werden können (Fig. 4), in eine zweite Position bewegbar sind, in der die Schaufeln 16 einen so geringen Abstand zueinander aufweisen, dass sie das Produkt 12 zumindest teilweise untergreifen.

Jede Schaufel 16 umfasst ein Schaufelblatt 18, das an einem Schaufelblatthalter 20 angebracht, z.B. angeschraubt, ist. Die Schaufelblatthalter 20 sind verschiebbar an dem Träger 14 gelagert. Die Schaufelblatthalter 20 sind starr ausgebildet, so dass die Schaufelblätter 18 stets einen fest vorgegebenen Abstand zu dem Träger 14 aufweisen. Die Schaufelblätter 18 liegen in einer Ebene, welche nachfolgend als Schaufelblattebene bezeichnet wird.

Zur Bewegung der Schaufeln 16 aus der ersten Position in die zweite Position und umgekehrt sind Antriebsmittel vorgesehen, welche im vorliegenden Ausführungsbeispiel zwei pneumatisch oder hydraulisch betätigbare Zylinder 22 umfassen, in denen jeweils ein Kolben 24 verschiebbar gelagert ist. Grundsätzlich ist aber auch eine Ausführungsform mit nur einem Zylinder oder mit einem elektrischen Antrieb zur Bewegung der Schaufeln 16 denkbar.

Die Kolben 24 sind mit einem Hebelarm 26 verbunden, welcher mittig um eine zur Schaufelblattebene senkrechte Drehachse verdrehbar an dem Träger 14 gelagert ist. Im Bereich seines einen Endes ist der Hebelarm 26 über einen verschwenkbaren Verbindungsarm 30 mit der einen Schaufel 16 verbunden. Im Bereich seines anderen Endes ist der Hebelarm 26 über einen entsprechenden Verbindungsarm 30 mit der anderen Schaufel 16 verbunden.

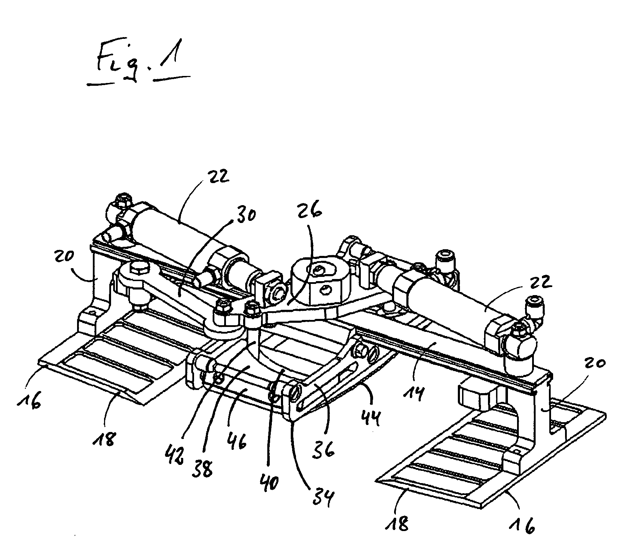

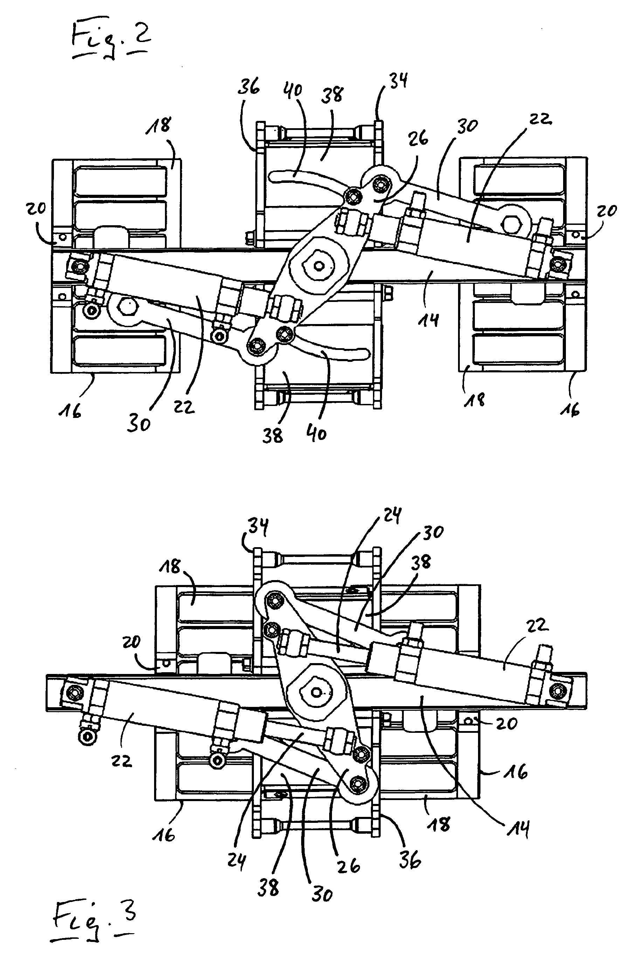

Sind die Kolben 24 in ihren jeweiligen Zylinder 22 eingefahren, so befinden sich die Schaufeln 16 in ihrer ersten Position (Fig. 1, 2 und 4). Werden die Zylinder 22 unter Druck gesetzt, so bewirken die aus den Zylindern 22 herausfahrenden Kolben 24 eine Verdrehung des Hebelarms 26 (in Fig. 2 und 3 entgegen dem Uhrzeigersinn), durch welche die Schaufeln 16 in ihre zweite Position gebracht werden und der Produktgreifer geschlossen wird (Fig. 3 und 5). Das Öffnen des Produktgreifers, d.h. die Bewegung der Schaufeln 16 aus ihrer zweiten Position in ihre erste Position, erfolgt in umgekehrter Weise, indem die Kolben 24 wieder in ihren jeweiligen Zylinder 22 hineingefahren werden.

Mittig zwischen den Schaufeln 16 ist ein Niederhalter 34 an der Unterseite des Trägers 14 angebracht, welcher dazu dient, das aufzunehmende Produkt 12 zu fixieren und ein Verrutschen des Produkts 12 zu verhindern, während die Schaufelblätter 18 unter das Produkt 12 geschoben werden.

Der Niederhalter 34 umfasst einen an dem Träger 14 befestigten Rahmen 36, der sich quer zum Träger 14 und somit quer zur Bewegungsrichtung der Schaufelblätter 18 erstreckt. Beiderseits des Trägers 14 sind zwei Schiebeleisten 38 verschiebbar in dem Rahmen 36 gelagert. Die Schiebeleisten 38 lassen sich in einer zur Schaufelblattebene parallelen Ebene rechtwinklig zur Bewegungsrichtung der Schaufelblätter 18 aufeinander zu und voneinander weg bewegen.

In jeder Schiebeleiste 38 ist ein Langloch 40 ausgebildet, welches um die Schwenkachse des Hebelarms 26 herum gekrümmt ist. In jedem Langloch 40 ist ein an dem Hebelarm 26 befestigtes Bolzenelement 42 geführt, welches sich bei einer Verschwenkung des Hebelarms 26 entlang des jeweiligen Langlochs 40 bewegt.

Die Langlöcher 40 sind derart positioniert und gekrümmt, dass die Schiebeleisten 38 bei herausfahrenden Kolben 24, in Fig. 2 und 3 also bei einer Verschwenkung des Hebelarms 26 entgegen dem Uhrzeigersinn, aufeinander zu bewegt werden und bei einfahrenden Kolben 24, in Fig. 2 und 3 also bei einer Verschwenkung des Hebelarms 26 im Uhrzeigersinn, auseinander bewegt werden. Auf diese Weise fahren bei zusammenfahrenden Schaufeln 16 auch die Schiebeleisten 38 zusammen bzw. bei auseinander fahrenden Schaufeln 16 auch die Schiebeleisten 38 auseinander.

Unter den Schiebeleisten 38 ist ein Bandgurt 44 des Niederhalters 34 angeordnet, der im Bereich seiner Enden an voneinander abgewandten Stirnflächen der Schiebeleisten 38 befestigt ist. Genauer gesagt sind die Endbereiche des Bandgurts 44 mittels stirnseitig an die Schiebeleisten 38 angeschraubten Klemmleisten 46 an den Schiebeleisten 38 gehalten. Der Bandgurt 44 weist eine gewisse Steifigkeit auf, so dass er aufgrund seiner stirnseitigen Anbringung an den Schiebeleisten 38 stets eine gewisse Wölbung aufweist.

Die Länge des Bandgurts 44 ist so gewählt, dass die Wölbung des Bandgurts 44 bei maximal zueinander beabstandeten Schiebeleisten 38, d.h. im vollständig geöffneten Zustand des Produktgreifers (Fig. 1, 2 und 4), einen vergleichsweise großen Radius aufweist. Der Bandgurt 44 ist in dieser Stellung der Schiebeleisten 38 also vergleichsweise flachgezogen.

Vorteilhafterweise ist der Produktgreifer so dimensioniert, d.h. die Höhe der Schaufelblatthalter 20, die Höhe des Rahmens 36 des Niederhalters 34 und die Länge des Bandgurts 44 sind so gewählt, dass der Bandgurt 44 im vollständig geöffneten Zustand des Produktgreifers nicht mit dem aufzunehmenden Produkt 12 in Kontakt kommt, sondern einen gewissen Abstand zu diesem aufweist.

Schließt sich der Produktgreifer, so wird der Bandgurt 44 durch die sich aufeinander zu bewegenden Schiebeleisten 38 nach unten ausgewölbt und auf das aufzunehmende Produkt 12 gedrückt (Fig. 5). Aufgrund seiner bereits erwähnten Steifigkeit übt der mit dem Produkt 12 in Eingriff stehende Bandgurt 44 eine gewisse Klemmkraft auf das Produkt 12 aus. Gleichzeitig sorgt die Flexibilität des Bandgurts 44 dafür, dass sich der Bandgurt 44 an die Oberflächenkontur des Produkts 12 anschmiegen kann, wodurch eine größere Kontaktfläche zwischen Bandgurt 44 und Produkt 12 erreicht wird. Im Ergebnis resultiert dies in einer zuverlässigeren und gleichzeitig schonenderen Fixierung des Produkts 12.

Beim Öffnen des Produktgreifers bewegen sich die Schaufeln 16 und die Schiebeleisten 38 wieder auseinander, wodurch der Bandgurt 44 flach gezogen und das aufgenommene Produkt 12 nicht nur von den Schaufelblättern 18, sondern auch von dem Niederhalter 34 freigegeben wird.

### Bezugszeichenliste

- 10: Produktauflage
- 12: Produkt
- 14: Träger
- 16: Schaufel
- 18: Schaufelblatt
- 20: Schaufelblatthalter
- 22: Zylinder
- 24: Kolben
- 26: Hebelarm
- 30: Verbindungsarm
- 34: Niederhalter
- 36: Rahmen
- 38: Schiebeleiste
- 40: Langloch
- 42: Bolzenelement
- 44: Bandgurt
- 46: Klemmleiste

## Patentansprüche

1. Produktgreifer zum Aufnehmen eines Produkts (12), umfassend
zwei Schaufelblätter (18),
ein Antriebsmittel, um die Schaufelblätter (18) zwischen einer ersten Position, in welcher die Schaufelblätter (18) auf gegenüberliegenden Seiten des aufzunehmenden Produkts (12) auf eine Auflage (10) für das aufzunehmende Produkt (12) aufsetzbar sind, und einer zweiten Position zu bewegen, in welcher sich die Schaufelblätter (18) zumindest teilweise unter dem aufzunehmenden Produkt (12) befinden,
einen Niederhalter (34) zum Fixieren des aufzunehmenden Produkts (12), während die Schaufelblätter (18) darunter bewegt werden, wobei der Niederhalter (34) oberhalb einer durch die Schaufelblätter (18) definierten Schaufelblattebene angeordnet ist, und
wobei der Niederhalter (34) an seiner dem aufzunehmenden Produkt (12) zugewandten Unterseite einen Bandgurt (44) umfasst, und
einen Mechanismus zum Auswölben des Bandgurts (44) in Richtung des aufzunehmenden Produkts (12),
**dadurch gekennzeichnet, dass**
der Mechanismus zwei Schiebeleisten (38) des Niederhalters (34) umfasst, an denen der Bandgurt (44) befestigt ist, wobei die Schiebeleisten (38) quer zur Bewegungsrichtung der Schaufelblätter (18) bewegbar sind.

2. Produktgreifer nach Anspruch 1,
**dadurch gekennzeichnet, dass**
der Mechanismus ausgebildet ist, um die Bewegung der Schaufelblätter (18) aus ihrer ersten Position in ihre zweite Position in eine Auswölbung des Bandgurts (44) in Richtung des aufzunehmenden Produkts (12) umzusetzen.

3. Produktgreifer nach Anspruch 1 oder 2,
**dadurch gekennzeichnet, dass**
der Bandgurt (44) im Bereich seiner Enden an voneinander abgewandten Stirnseiten der Schiebeleisten (38) befestigt ist.

4. Produktgreifer nach einem der vorstehenden Ansprüche,
**dadurch gekennzeichnet, dass**
die Schiebeleisten (38) aufeinander zu bewegbar sind, um den Bandgurt (44) in Richtung des aufzunehmenden Produkts (12) auszuwölben.

5. Produktgreifer nach einem der vorstehenden Ansprüche,
**dadurch gekennzeichnet, dass**
die Schiebeleisten (38) rechtwinklig zur Bewegungsrichtung der Schaufelblätter (18) bewegbar sind.

6. Produktgreifer nach einem der vorstehenden Ansprüche,
**dadurch gekennzeichnet, dass**
die Schiebeleisten (38) über eine Kulissenführung mit dem Antriebsmittel gekoppelt sind.

7. Produktgreifer nach einem der vorstehenden Ansprüche,
**dadurch gekennzeichnet, dass**
die Schiebeleisten (38) jeweils eine gekrümmte Nut oder ein gekrümmtes Langloch (40) aufweisen, in der bzw. dem jeweils ein Bolzenelement (42) geführt ist.

8. Produktgreifer nach Anspruch 7,
**dadurch gekennzeichnet, dass**
die Bolzenelemente (42) an einem zur Bewegung der Schaufelblätter (18) vorgesehenen Hebelarm (26) angebracht sind.

9. Produktgreifer nach Anspruch 8,
**dadurch gekennzeichnet, dass**
der Hebelarm (26) um eine im Wesentlichen mittig angeordnete und zu der Schaufelblattebene senkrecht orientierte Schwenkachse verschwenkbar ist.

10. Produktgreifer nach Anspruch 9,
**dadurch gekennzeichnet, dass**
die Bolzenelemente (42) auf gegenüberliegenden Seiten der Schwenkachse an dem Hebelarm (26) angebracht sind.

11. Produktgreifer nach einem der Ansprüche 8 bis 10,
**dadurch gekennzeichnet, dass**
der Hebelarm (26) mittels wenigstens eines pneumatisch oder hydraulisch betätigbaren Zylinders (22) oder mittels eines elektrischen Antriebs verschwenkbar ist.

## Claims

1. A product gripper for picking up a product (12), comprising
two spade blades (18),
a drive means to move the spade blades (18) between a first position, in which the spade blades (18) can be placed onto a support (10) for the product (12) to be picked up at oppositely disposed sides of the product (12) to be picked up, and a second position, in which the spade blades (18) are located at least partly beneath the product (12) to be picked up; and
a downholder (34) for fixing the product (12) to be picked up while the spade blades (18) are moved beneath it, with the downholder (34) being arranged above a spade blade plane defined by the spade blades (18), and
wherein the downholder (34) includes a belt strap (44) at its lower side facing the product (12) to be picked up; and
a mechanism for arching the belt strap (44) in the direction of the product (12) to be picked up,
**characterized in that**
the mechanism includes two slide rails (38) of the downholder (34) and the belt strap (44) is fastened to them, wherein
the slide rails (38) are movable transversely to the direction of movement of the spade blades (18).

2. A product gripper in accordance with claim 1,
**characterized in that**
the mechanism is designed to convert the movement of the spade blades (18) from their first position into their second position into an arching of the belt strap (44) in the direction of the product (12) to be picked up.

3. A product gripper in accordance with claim 1 or claim 2,
**characterized in that**
the belt strap (44) is fastened in the region of its ends to mutually remote end faces of the slide rails (38).

4. A product gripper in accordance with any one of the preceding claims,
**characterized in that**
the slide rails (38) can be moved toward one another to arch the belt strap (44) in the direction of the product (12) to be picked up.

5. A product gripper in accordance with any one of the preceding claims,
**characterized in that**
the slide rails (38) are movable at right angles to the direction of movement of the spade blades (18).

6. A product gripper in accordance with any one of the preceding claims,
**characterized in that**
the slide rails (38) are coupled via a cam guide to the drive means.

7. A product gripper in accordance with any one of the preceding claims,
**characterized in that**
the slide rails (38) each have a curved groove or a curved elongate hole (40) in which a respective bolt element (42) is guided.

8. A product gripper in accordance with claim 7,
**characterized in that**
the bolt elements (42) are attached to a lever arm (26) provided for moving the spade blades (18).

9. A product gripper in accordance with claim 8,
**characterized in that**
the lever arm (26) is pivotable about a pivot axis arranged substantially centrally and oriented perpendicular to the spade blade plane.

10. A product gripper in accordance with claim 9,
**characterized in that**
the bolt elements (42) are attached to the lever arm (26) at oppositely disposed sides of the pivot axis.

11. A product gripper in accordance with any one of the claims 8 to 10,
**characterized in that**
the lever arm (26) is pivotable by means of at least one pneumatically or hydraulically actuable cylinder (22) or by means of an electric drive.

## Revendications

1. Dispositif de saisie de produit pour prendre un produit (12), comprenant
deux palettes (18),
un moyen d'entraînement pour déplacer les palettes (18) entre une première position dans laquelle les palettes (18) peuvent être posées sur des côtés opposés du produit à prendre (12) sur un support (10) pour le produit à prendre (12), et une seconde position dans laquelle les palettes (18) se trouvent au moins partiellement au-dessous du produit à apprendre (12),
un élément de maintien vers le bas (34) pour fixer le produit à prendre (12) pendant que les palettes (18) sont déplacées au-dessous de celui-ci, ledit élément de maintien vers le bas (34) étant agencé au-dessus d'un plan de palette défini par les palettes (18), et
dans lequel l'élément de maintien vers le bas (34) comprend une ceinture en bande (44) à sa face inférieure tournée vers le produit à prendre (12), et
un mécanisme pour faire bomber la ceinture en bande (44) en direction du produit à prendre (12),
**caractérisé en ce que**
le mécanisme comprend deux barrettes coulissantes (38) de l'élément de maintien vers le bas (34), sur lesquelles est fixée la ceinture en bande (44), et
les barrettes coulissantes (38) sont déplaçables transversalement à la direction de déplacement des palettes (18).

2. Dispositif de saisie de produit selon la revendication 1,
**caractérisé en ce que**
le mécanisme est réalisé pour convertir le déplacement des palettes (18) depuis leur première position vers leur seconde position en un bombement de la ceinture en bande (44) en direction du produit à prendre (12).

3. Dispositif de saisie de produit selon la revendication 1 ou 2, **caractérisé en ce que** la ceinture en bande (44) est fixée dans la région de ses extrémités sur des côtés frontaux détournés l'un de l'autre des barrettes coulissantes (38).

4. Dispositif de saisie de produit selon l'une des revendications précédentes,
**caractérisé en ce que** les barrettes coulissantes (38) sont déplaçables l'une vers l'autre afin de faire bomber la ceinture en bande (44) en direction du produit à prendre (12).

5. Dispositif de saisie de produit selon l'une des revendications précédentes,
**caractérisé en ce que** les barrettes coulissantes (38) sont déplaçables à angle droit par rapport à la direction de déplacement des palettes (18)

6. Dispositif de saisie de produit selon l'une des revendications précédentes,
**caractérisé en ce que** les barrettes coulissantes (38) sont couplées au moyen d'entraînement via un guidage à glissière.

7. Dispositif de saisie de produit selon l'une des revendications précédentes,
**caractérisé en ce que** les barrettes coulissantes (38) présentent chacune une rainure incurvée ou un trou oblong incurvé (40) dans laquelle/lequel est respectivement guidé un élément en forme de goujon (42).

8. Dispositif de saisie de produit selon la revendication 7,
**caractérisé en ce que** les éléments en forme de goujon (42) sont rapportés sur un bras de levier (26) prévu pour le déplacement des palettes (18).

9. Dispositif de saisie de produit selon la revendication 8,
**caractérisé en ce que** le bras de levier (26) est capable de pivoter autour d'un axe de pivotement agencé sensiblement au milieu et orienté perpendiculairement au plan des palettes.

10. Dispositif de saisie de produit selon la revendication 9,
**caractérisé en ce que** les éléments en forme de goujon (42) sont rapportés sur des côtés opposés de l'axe de pivotement sur le bras de levier (26).

11. Dispositif de saisie de produit selon l'une des revendications 8 à 10,
**caractérisé en ce que** le bras de levier (26) est amené à pivoter au moyen d'au moins un cylindre (22) à actionnement pneumatique ou hydraulique, ou au moyen d'un entraînement électrique.
